# EUROPÄISCHE PATENTSCHRIFT

(11) **EP 2 377 385 B1**
(45) Veröffentlichungstag und Bekanntmachung des Hinweises auf die Patenterteilung: **17.04.2013**
(21) Anmeldenummer: 11155594.2
(22) Anmeldetag: 23.02.2011
(51) Int. Cl.: A01D 41/127

(54) **Verfahren zur Feststellung eines sich an einem Arbeitsorgan einer selbstfahrenden Erntemaschine ausbildenden Erntegutstaus sowie Steuereinrichtung**
Method for determining the status of harvested goods on a working element of a self-propelled harvesting machine and control device
Procédé d'établissement d'un amoncellement de récolte se développant sur un organe de travail d'une moissonneuse automobile et dispositif de commande

(30) Priorität: 16.04.2010 DE 102010016468
(43) Veröffentlichungstag der Anmeldung: 19.10.2011
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- DE-A1- 2 349 821
- US-B1- 7 354 341

## Beschreibung

Verfahren zur Feststellung eines sich an einem Arbeitsorgan einer selbstfahrenden Erntemaschine ausbildenden Erntegutstaus sowie Steuereinrichtung

Die Erfindung betrifft ein Verfahren zur Feststellung eines sich an einem Arbeitsorgan einer mehrere Arbeitsorgane aufweisenden selbstfahrenden Erntemaschine ausbildenden Erntegutstaus gemäß dem Oberbegriff des Anspruches 1 sowie eine Steuereinrichtung für eine selbstfahrende Erntemaschine gemäß dem Oberbegriff des Anspruches 10.

Ein Verfahren zur Feststellung eines sich an einem Dresch-Trennrotor eines Mähdreschers ausbildenden Erntegutstaus ist aus der EP 1 749 434 B1 bekannt. Gemäß dem Verfahren der EP 1 749 434 B1 wird vorgeschlagen, das Bevorstehen eines Gutstaus an dem Dresch-Trennrotor zu bestimmen, indem das Ergebnis der Messung einer Ist-Motordrehzahl eines Hydraulikmotors und der Messung einer Motordrehzahl eines Verbrennungsmotors, welche gemeinsam den Dresch-Trennrotor antreiben, sowie der Messung der Drehzahl des Dresch-Trennrotors, kombiniert werden und aus der Kombination der gemessenen Verbrennungsmotordrehzahl und der gemessenen Rotordrehzahl eine Hydraulikmotordrehzahl berechnet, die mit der gemessenen Hydraulikmotordrehzahl verglichen wird. Wird auf Grund des Vergleiches ein bevorstehender Gutstau erkannt, wird der Dresch-Trennrotor von dem diesen antreibenden Hydraulikmotor und Verbrennungsmotor entkoppelt. Zudem wird der Antrieb der Zuführeinrichtung entkoppelt, um das Nachliefern weiteren Erntegutes zu verhindern. Das Verfahren gemäß der EP 1 749 434 B1 setzt voraus, dass ein bevorstehender Erntegutstau im Dresch-Trennrotor so rechtzeitig bestimmbar ist, dass der Dresch-Trennrotor die Situation selbsttätig bereinigen kann, was voraussetzt, dass dem Dresch-Trennrotor ausreichend Zeit zur Bewältigung der Situation eingeräumt wird sowie dass während dieser Zeit dem Dresch-Trennrotor kein weiteres Erntegut zugeführt wird. Der hierfür zu veranschlagende Zeitraum wirkt sich auf den Betrieb des Mähdreschers zweifach aus, denn zum einen tritt eine Unterbrechung des Erntevorganges als solches ein und zum anderen fährt der Mähdrescher während dieses Zeitraumes weiterhin über das abzuerntende Feld, ohne jedoch Gut aufzunehmen, da die Zuführeinrichtung für diesen Zeitraum von ihrem Antrieb entkoppelt wird. Es kommt somit neben dem Produktionsausfall auch zu Ernteverlusten, die in Kauf genommen werden müssen, ungeachtet des Ergebnisses der Bewältigung des Erntegutstaus.

Aus der DE 23 49 821 A1 ist eine Steuerungseinrichtung für eine selbstfahrende Erntemaschine gemäß dem Oberbegriff des Anspruches 10 bekannt. Um auftretende Störungen beim Transport von durch die Haspel aufgenommenen Erntegutes zum Dreschewerk zu erkennen und aufzuzeigen, wird die Drehzahl der Haspel überwacht. Bei Erreichen eines Schwellewertes der Haspeldrehzahl, bei welchem ein Gutstau im Bereich der Dreschorgane zu erwarten Ist, wird ein Warnhinweis ausgegeben oder eine Maßnahme eingeleitet. Als Maßnahmen werden das Stoppen der Haspel oder der Maschine genannt.

Aus der US 7,354,341 B1 ist eine Steuerungseinrichtung bekannt, welche zur Feststellung eines sich anbahnenden Erntegutstaus eingerichtet ist. Dies erfolgt gemäß der US 7,354,341 B1 durch eine Sensorik, die das Strömungsverhalten oder das Temperaturverhalten eines Luftstromes im Bereich des Häckselaggregates detektiert. Aus der Änderung der Strömungsgeschwindigkeit, der Strömungsrichtung des Luftstromes oder auf Grund einer Temperaturschwankung im Luftstrom wird darauf geschlossen, dass sich ein Erntegutstau anbahnt. Entsprechend wird eine Maßnahme eingeleitet, welche die Anzeige eines Warnsignals oder die Reduzierung der Vorfahrtgeschwindigkelt umfasst.

Aufgabe der vorliegenden Erfindung ist es, ein Verfahren zur Feststellung eines sich an einem Arbeitsorgan einer selbstfahrenden Erntemaschine ausbildenden Erntegutstaus bereitzustellen, welches eine zuverlässige und frühzeitige Erkennung eines sich anbahnenden Gutstaus zulässt und in Abhängigkeit von dem Grad der festgestellten Ausbildung des Gutstaus geeignete Maßnahmen einleitet, die zu einer Behebung des Gutstaus führen beziehungsweise die Auswirkungen des Erntegutstaus für den Fall, dass dieser unabwendbar ist, zu minimieren.

Diese Aufgabe wird erfindungsgemäß durch die kennzeichnenden Merkmale des Patentanspruches 1 gelöst.

Vorteilhafte Weiterentwicklungen und Ausgestaltungen sind Gegenstand der jeweiligen Unteransprüche.

Gemäß dem Anspruch 1 wird vorgeschlagen, dass als Parameter die Drehzahl des Arbeitsorganes überwacht wird, wobei bei einem Passieren eines ersten Schwellwertes für einen Drehzahlabfall zunächst zumindest eine den Erntebetrieb der Erntemaschine beeinflussende Einstellung verändert wird, die zu einer Reduzierung der zu verarbeitenden Erntegutemenge führt, während die Einstellungen des von einem Erntegutstau betroffenen Arbeitsorganes unverändert bleiben. Bei einem Passieren eines zweiten Schwellwertes für einen Drehzahlabfall wird zumindest eine den Erntebetrieb der selbstfahrenden Erntemaschine beeinflussende Einstellung verändert, die zu einer Unterbreohung der Zufuhr von Erntegut aufgehoben, während bei einem anhaltenden Drehzahlabfall das betroffene Arbeitsorgan automatisch von seinem Antrieb entkoppelt wird. Die Überwachung der Drehzahl der Arbeitsorgane ermöglicht es, das Auftreten eines sich anbahnenden Erntegutstaus unmittelbar an dem davon betroffenen Aggregat so frühzeitig erkennen zu können, dass in Abhängigkeit von vorgebbaren Schwellwerten für die Drehzahl des jeweiligen Arbeitsorganes bei deren Passieren frühzeitig geeignete Maßnahmen eingeleitet werden können, um dem sich anbahnenden Erntegutstau zu begegnen. Hierdurch lassen sich Verstopfungen der Arbeitsorgane durch Erntegut vermeiden, die nur zeitaufwändig manuell behoben werden können beziehungsweise Beschädigungen infolge der auftretenden Überlastung der Arbeitsorgane sowie an deren Antriebe verhindern. Die Maßnahme kann darin bestehen, entweder den sich anbahnenden Erntegutstau zu beseitigen, indem zumindest eine den Erntebetrieb der selbstfahrenden Erntemaschine beeinflussende Einstellung verändert wird, die zu einer Reduzierung der zu verarbeitenden Erntegutemenge führt, wodurch ein Abbau des sich anbahnenden Erntegutstaus durch das von dem Erntegutstau betroffene Arbeitsorgan selbst ermöglicht wird, oder eine weitere Ausprägung des Erntegutstaus zu verhindern, um längere Stillstandszeiten der Erntemaschine in Folge der Beseitigung des Erntegutstaus zu verhindern, indem zumindest eine den Erntebetrieb der selbstfahrenden Erntemaschine beeinflussende Einstellung verändert wird, die zu einer Unterbrechung der Zufuhr von Erntegut führt, während die Einstellungen des von einem Erntegutstau betroffenen Arbeitsorganes unverändert bleiben. Auf diese Weise wird einerseits einer Verschärfung der Verstopfungssituation an der Gesamtmaschine entgegengewirkt, andererseits werden die Folgen des Erntegutstaus an dem betroffenen Arbeitsorgan gemildert, was es dem Bediener ermöglicht, den Betrieb nach der Beseitigung des Erntegutstaus schneller wieder aufnehmen zu können, indem bei einem Wiederansteigen der Drehzahl des betroffenen Arbeitsorganes die Unterbrechung der Zufuhr von Erntegut aufgehoben wird, während bei einem anhaltenden Drehzahlabfall das betroffene Arbeitsorgan automatisch von seinem Antrieb entkoppelt wird. Die frühzeitige Erkennung eines sich anbahnenden Erntegutstaus ermöglicht es, zunächst nur die Einstellmaßnahmen durchzuführen, die nicht zu einer vollständigen Unterbrechung des Erntevorganges führen. Erst wenn der Erntegutstau in seiner Ausprägung soweit fortgeschritten ist, dass ein irreversibler Zustand an dem Arbeitsorgan auftreten würde, was bei dem Überschreiten des zweiten Schwellwertes angenommen wird, werden Einstellmaßnahmen eingeleitet, die zur vollständigen Unterbrechung des Erntevorganges führen. Das aufwändige Freiräumen der betroffenen Aggregate kann auf diese Weise verhindert werden, da ein weiteres Nachführen von Erntegut durch die dem von dem Erntegutstau betroffenen Arbeitsorgane vorgeschalteten Arbeitsorgane verhindert wird, was zu einem Auftreten weiter Erntegutverstopfungen an den vorgeschalteten Arbeitsorganen führen würde. Insgesamt lassen sich durch das erfindungsgemäße Verfahren die produktiven Betriebszeiten der Erntemaschine verlängern sowie Ernteverluste verringern. Des Weiteren führt das frühzeitige Eingreifen zu einer Verringerung von Schäden an Antrieben, Drehmomentübertragungselementen sowie Gutförderelementen, die auf Grund einer Überlastung bei einem Erntegutstau auftreten können, wenn verspätet auf das Auftreten des Erntegutstaus reagiert würde. Ein weiterer Aspekt ist, dass nach dem Beseitigen eines Erntegutstaus der Bediener die Erntemaschine zurückhaltender auslastet, um einen erneuten Stillstand auf Grund eines Erntegutstaus zu vermeiden. Auch dieses Verhalten geht letztlich zu Lasten der Produktivität der Erntemaschine, was jedoch durch das erfindungsgemäße Verfahren verhindert werden kann. Die Unterbrechung der Erntegutzufuhr sowie das automatische Entkoppeln der dem betroffenen Arbeitsorgan vorgeschalteten Arbeitsorgane von ihrem jeweiligen Antrieb kann dabei in Abhängigkeit von der Dauer eines Zeitintervalles erfolgen, in welchem das Überschreiten des Schwellwertes dauerhaft erfasst wird. Auf diese Weise lässt sich das Vorliegen lediglich einer Belastungsspitze ausschließen, die zur Abschaltung des Arbeitsorganes oder der Arbeitsorgane führen könnte.

Vorzugsweise kann zu einer Reduzierung der zu verarbeitenden Erntegutemenge die Vorfahrtgeschwindigkeit verändert werden. Diese Maßnahme führt zu einer sofortigen Reduzierung der Zuführung von Erntegut, so dass dem von einem sich ausbildenden Erntegutstau betroffenen Arbeitsorgan die Möglichkeit gegeben wird, sich zu regenerieren.

Weiterhin können bei einem Passieren des ersten Schwellwertes eines Arbeitsorganes zu einer Reduzierung der zu verarbeitenden Erntegutemenge die Einstellungen zumindest eines der Arbeitsorgane verändert werden, die dem von einem Erntegutstau betroffenen Arbeitsorgan vorgeschaltet sind. Durch diese Maßnahme wird erreicht, dass die Einstellungen zumindest eines der dem von einem Erntegutstau betroffenen Arbeitsorgan vorgeschalteten Arbeitsorgane in der Weise angepasst werden, dass dem betroffenen Arbeitsorgan die Möglichkeit gegeben wird, den sich anbahnenden Erntegutstau mit den für dieses Arbeitsorgan gewählten Einstellungen zu bewältigen ohne den Ernteprozess vollständig unterbrechen zu müssen beziehungsweise, wie im Stand der Technik vorgesehen, die Zuführeinrichtung von ihrem Antrieb zu entkoppeln, was zu Ernteverlusten führt. Erfindungsgemäß werden die Einstellungen des zumindest einen vorgeschalteten Arbeitsorganes in Abhängigkeit vom Typ des betroffenen Arbeitaggregates verändert.

Bei einem Passieren des zweiten Schwellwertes für diesen Parameter kann zur Unterbrechung der Zufuhr von Erntegut der Antrieb des das Erntegut von einem Feld aufnehmenden Arbeitsorganes unterbrochen und die Vorfahrt der Erntemaschine unterbunden werden. Auf diese Weise werden die Auswirkungen des Erntegutstaus an dem von dem Erntegutstau unmittelbar betroffenen Arbeitsorgan sowie die Gefahr eines zusätzlichen Erntegutstaus an andern Arbeitsorganen der Erntemaschine minimiert.

Weiterhin kann vorgesehen sein, dass bei einem Passieren des zweiten Schwellwertes eines Arbeitsorganes alle diesem vorgeschalteten Arbeitsorgane aktiv gebremst werden. Somit wird die Zuführung von Erntegut durch nachlaufende Arbeitsorgane nach dem Entkoppeln von ihrem jeweiligen Antrieb unterbunden, was auch die Gefahr des Auftretens von weiteren Erntegutstauungen in anderen Arbeitsorganen weiter reduziert.

Vorteilhafterweise kann als Indikator für den Zeitpunkt der Wiederinbetriebnahme der abgeschalteten Arbeitsorgane eine positive Beschleunigung des Antriebes gewertet werden. Die zuvor auf Grund des Passierens des zweiten Schwellwertes abgeschalteten Arbeitsorgane können somit zu einem frühest möglichen Zeitpunkt wieder in Betrieb genommen werden. Dies hat den Vorteil, dass die Wiederinbetriebnahme der Arbeitsorgane ohne weitere Verzögerung erfolgen kann, da durch das aktive Bremsen der Arbeitsorgane ein Reversieren oder ein manuelles Freiräumen der dem von dem Erntegutstau betroffenen Arbeitsorgan vorgeschalteten Arbeitsorgane nicht notwendig wird, während das von dem Erntegutstau unmittelbar betroffene Arbeitsorgan den Erntegutmaterialüberschuss hat abarbeiten können.

Des Weiteren kann ein sich ausbildendes Erntegutstau repräsentierendes Signal generiert werden, das einem Bediener des Mähdreschers zur Anzeige gebracht wird.

Insbesondere kann dem Bediener in Abhängigkeit von dem betroffenen Arbeitsorgan zumindest ein Vorschlag zur Einstellung des Arbeitsorganes aufgezeigt wird, um ein erneutes Auftreten eines Erntegutstaus an diesem zu vermeiden. Mit der Signalisierung einhergehend, dass ein Erntegutstau bevorgestanden hat, wird dem Bediener in Abhängigkeit von dem betroffenen Arbeitsorgan zumindest ein Vorschlag zur Einstellung des Arbeitsorganes aufgezeigt, der unter den aktuell bestehenden Erntebedingungen geeignet ist, ein erneutes Auftreten eines Erntegutstaus an diesem Arbeitsorgan zu vermeiden.

Weiterhin betrifft die vorliegende Erfindung eine Steuerungseinrichtung für eine selbstfahrenden Erntemaschine, die eine Vielzahl von Arbeitsorganen aufweist, die von mindestens einem Antrieb angetrieben werden, wobei den Arbeitsorganen und dem mindestens einen Antrieb zur Überwachung ihres Betriebszustandes zumindest ein Sensor zugeordnet ist, dass ein von dem zumindest einem Sensor erfasster Istwert eines Parameters des mindestens einen Arbeitsorganes von der dazu eingerichteten Steuerungseinrichtung auswertbar und mit mindestens einem Schwellwert für diesen Parameter vergleichbar ist, der für einen sich ausbildenden Erntegutstau an dem Arbeitsorgan charakteristisch ist.

Eine weitere Aufgabe der Erfindung besteht somit darin, eine Steuereinrichtung bereitzustellen, die automatisiert eine Maßnahmen in Abhängigkeit von der Ausprägung eines Erntegutstaus an einem Arbeitsorgan einer selbstfahrenden Erntemaschine einleitet.

Diese Aufgabe wird erfindungsgemäß durch Steuereinrichtung gelöst, die die kennzeichnenden Merkmale des unabhängigen Patentanspruches 10 aufweist.

Gemäß dem Patentanspruch 10 wird vorgeschlagen, dass die Steuerungselnrichtung dazu eingerichtet ist, zunächst zumindest eine den Erntebetrieb der Erntemaschine (1) beeinflussende Einstellung zu verändern, die zu einer Reduzierung der zu verarbeitenden Erntegutemenge führt, während die Einstellungen des von einem Erntegutstau betroffenen Arbeitsorganes (20) unverändert bleiben; bei einem Passieren eines zweiten Schwellwertes (SW2) für einen Drehzahlabfall zumindest eine den Erntebetrieb der Erntmaschine (1) beeinflussende Einstellung zu verändern, die zu einer Unterbrechung der Zufuhr von Erntegut führt, während die Einstellungen des von einem Erntegutstau betroffenen Arbeitsorganes (20) unverändert bleiben, und bei einem Wiederansteigen der Drehzahl des betroffenen Arbeitsorganes (20) die Unterbrechung der Zufuhr von Erntegut aufzuheben, oder bei einem anhaltenden Drehzahlabfall das betroffene Arbeitsorgan (20) automatisch von seinem Antrieb zu entkoppeln.

Vorzugsweise kann das mindestens eine Arbeitsorgan mit einer Bremseinrichtung ausgeführt sein, die von der Steuerungseinrichtung ansteuerbar ist.

Die Erfindung wird nachstehend anhand eines in den Zeichnungen dargestellten Ausführungebeispieles näher erläutert.

Es zeigen:
- Fig. 1: eine schematisierte Längsschnittdarstellung eines Mähdreschers;
- Fig. 2: ein Diagramm eines exemplarischen Drehzahlverlaufes eines Arbeitsorganes des Mähdreschers;
- Fig. 3: ein exemplarisches Ablaufdiagramm, welches das Grundprinzip des Verfahrens in verallgemeinerter Form darstellt.

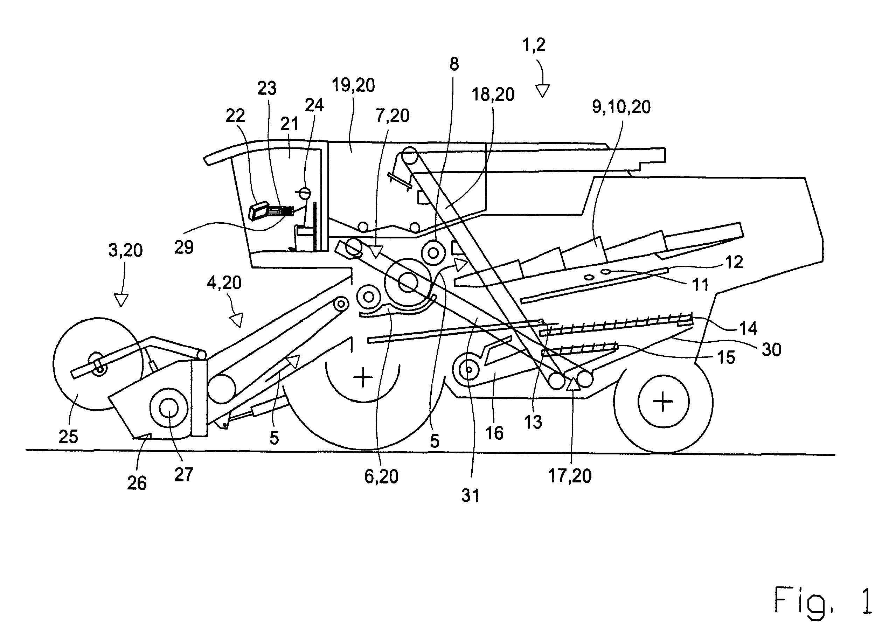

Die in Fig. 1 schematisch dargestellte, als Mähdrescher 2 ausgeführte landwirtschaftliche Erntemaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom, der durch den Pfeil 5 angedeutet ist, wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Erntegutstrom 5 so um, dass er unmittelbar an eine als Hordenschüttler 9 ausgeführte Trenneinrichtung 10 übergeben wird. Auf dem oszillierenden Hordenschüttler 9 wird der Erntegutstrom 5 so gefördert, dass in dem Erntegutstrom 5 enthaltene freibewegliche Körner 11 im untenseitigen Bereich des Hordenschüttlers 9 abgeschieden werden.

Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich durch einen Elevator 18 an einen Korntank 19 übergeben. Die Siebebenen 14, 15 sind teilweise übereinander angeordnet, so dass das Erntegut in zwei Stufen unterschiedlich fein gesiebt wird, wobei die Maschenweite der Siebebenen 14, 15 veränderbar ist. Durch die Veränderung der Maschenweite und /oder der Drehzahl des Gebläses 16 lassen sich der Anteil und die Zusammensetzung der Erntegutmenge, die durch die Sieböffnungen hindurch tritt, der so genannte Siebdurchgang und der Anteil der über die Siebebenen 14, 15 transportiert wird, der so genannte Siebüberlauf beeinflussen. Zudem ist die obere Siebebene 14 in der Regel so ausgeführt, dass sie in ihrem rückwärtigen Bereich, dem so genannten Überkehrbereich, eine größere Maschenweiten aufweist. Ein Siebdurchgang, der im Überkehrbereich durch die obere Siebebene 14 hindurch fällt und ein Siebüberlauf am Ende der unteren Siebebene 15, enthält in der Regel schwerere Teilchen, das heißt unausgedroschene Ähren. Der Siebdurchgang zusammen mit dem Siebüberlauf wird nachfolgend als so genannte Überkehrerntegutmenge bezeichnet. Die Überkehrerntegutmenge fällt auf einen schräg verlaufenden Auffangboden 30 unterhalb der Reinigungseinrichtung 17 und gleitet in eine Ährenförderschnecke. Die Ährenförderschnecke fördert die

Überkehrerntegutmenge in einen Überkehrelevator 31, durch den sie erneut den Dreschorganen 7 zuführt werden.

Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, der Elevator 18 sowie der Überkehrelevator 31 verallgemeinernd als Arbeitsorgane 20 der landwirtschaftlichen Erntemaschine 1 bezeichnet.

Weiterhin verfügt die landwirtschaftliche Erntemaschine 1, die abweichend vom hier dargestellten Mähdrescher 2 auch ein Feldhäcksler sein kann, über eine Fahrzeugkabine 21 in der zumindest eine mit einer Anzeigeeinrichtung 22 versehene Steuerungseinrichtung 23 angeordnet ist, mittels derer automatisch oder vom Bediener 24 der landwirtschaftlichen Arbeitsmaschine 1 initiiert, eine Vielzahl von, noch näher zu beschreibenden Prozessen gesteuert werden können. Die Steuerungseinrichtung 23 kommuniziert bidirektional über ein Bussystem mit den Arbeitsorganen 20 der Erntemaschine 1. In an sich bekannter Weise umfasst das Getreideschneidwerk 3 eine Haspel 25, einen Messerbalken 26 sowie eine Einzugsförderschnecke 27, wie in Fig. 1 angedeutet.

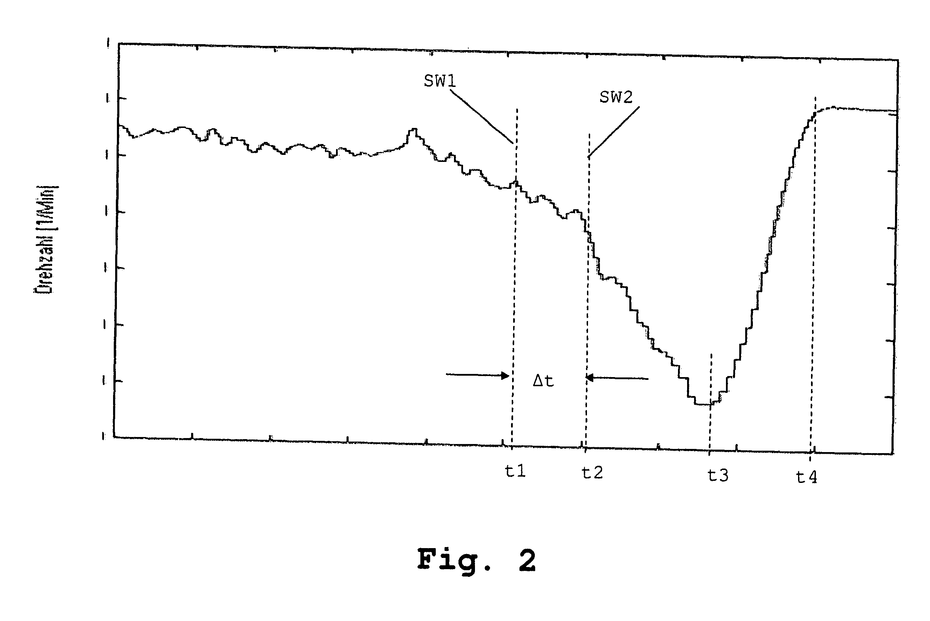

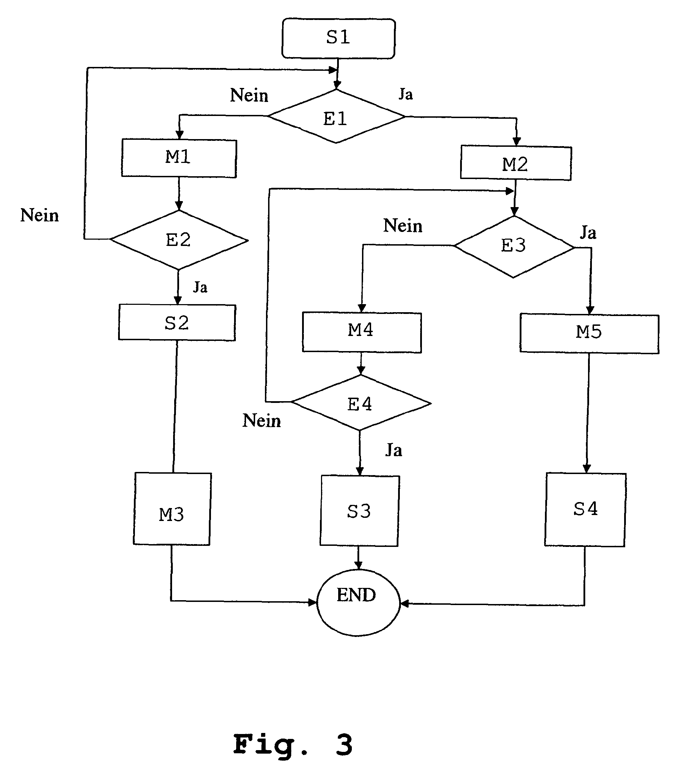

Anhand der Darstellung in Fig. 2 wird zunächst das Erkennen des Auftretens eines sich an einem Arbeitsorgan 20 der landwirtschaftlichen Erntemaschine 1 ausbildenden Erntegutstaus erläutert. Dessen Ausbildung wird durch die Auswertung eines von zumindest einem Sensor erfassten Istwertes eines Parameters, der der Überwachung des Betriebszustandes eines der Arbeitsorgane 20 der Erntemaschine 1 dient, der mit mindestens einem vorgebbaren Schwellwert für diesen Parameter verglichen wird, der für einen sich ausbildenden Erntegutstau an diesem Arbeitsorgan 20 charakteristisch ist, bestimmt. Bei dem sensierten Parameter handelt es sich um die Drehzahl des Arbeitsorganes 20. Das Diagramm in Fig. 2 stellt den zeitlichen Verlauf der Drehzahl eines belasteten Arbeitsorganes 20 im Betrieb dar. Die Drehzahl unterschreitet zu einem ersten Zeitpunkt t1 erstmalig einen ersten Schwellwert SW1. Das Passieren des ersten Schwellwertes SW1 löst eine erste Maßnahme M1 aus, die eine oder mehrere Aktionen umfassen kann, welche weiter unten anhand des Ablaufdiagrammes gemäß Fig. 3 näher erläutert wird. Diese erste Maßnahme M1 dient dazu, einen weiteren Drehzahlabfall zu verhindern, der für das Auftreten eines sich ausbildenden Erntegutstaus symptomatisch ist. Gemäß dem weiteren Verlauf der Drehzahl in dem Diagramm nach Fig. 2 wird dieser Schwellwert SW1 für ein Zeitintervall Δt dauerhaft unterschritten, da die ab dem Zeitpunkt t1 eingeleitete erste Maßnahme M1 nicht zu einer Unterbrechung des Drehzahlabfalls und zu einer anschließenden Umkehrung des Drehzahlverlaufes geführt hat, was den Rückschluss zulässt, das der Erntegutstau des betroffenen Arbeitsorganes 20 nicht von diesem selbsttätig beseitigt werden konnte.

Zu einem Zeitpunkt t2 wird auf Grund des Drehzahlabfalls ein zweiter Schwellwert SW2 passiert, dessen Passieren eine zweite, von der ersten Maßnahme M1 abweichende Maßnahme M2 auslöst, die gleichfalls anhand des Ablaufdiagrammes gemäß Fig. 3 erläutert wird. Dem Auslösen der zweiten Maßnahme M2 nach dem Passieren des zweiten Schwellwertes SW2 folgt ein weiterer Drehzahlabfall, bis die Drehzahl ab einem Zeitpunkt t3, einem Wendepunkt des Kurvenverlaufes der Drehzahl gemäß dem Diagramm in Fig. 2, wieder ansteigt und zu einem Zeitpunkt t4 die Leerlaufdrehzahl des von dem Gutstau betroffenen Arbeitsorganes 20 erreicht wird.

In Fig. 3 ist ein Ablaufdiagramm abgebildet, welches das Grundprinzip des Verfahrens in verallgemeinerter Form darstellt. In einem ersten Schritt S1 wird das Auftreten eines Gutstaus erkannt, was auf das Passieren eines der beiden Schwellwerte SW1 oder SW2 zurückzuführen ist. In einem ersten Abfrageschritt E1 wird in Abhängigkeit von dem Passieren des ersten Schwellwertes SW1 oder des zweiten Schwellwertes SW2 entschieden, welche möglichen Maßnahmen M1 oder M2 eingeleitet werden, um den potentiellen Auswirkungen eines sich anbahnenden Erntegutstaus an dem Arbeitsorgan 20 entgegen zu wirken, dessen Drehzahlabfall zu einem Passieren eines der beiden Schwellwerte SW1, SW2 geführt hat. Hierbei charakterisieren die Schwellwerte SW1, SW2 die Intensität respektive den Fortschritt des sich anbahnenden Erntegutstaus.

Die mindestens eine erste Maßnahme M1 wird in Folge des Passierens des ersten Schwellwertes SW1 eingeleitet. Bei der mindestens einen ersten Maßnahme M1 handelt es sich um eine Veränderung einer zumindest den Erntebetrieb der selbstfahrenden Erntemaschine beeinflussenden Einstellung, deren Änderung zu einer Reduzierung der zu verarbeitenden Erntegutemenge führt. Dabei kommen für die Reduzierung der zu verarbeitenden Erntegutmenge in Abhängigkeit von dem betroffenen Arbeitsorgan 20 verschiedene Aktionen in Betracht, wie nachstehend beispielhaft erläutert wird.

Sind beispielsweise als ein Arbeitsorgan 20 die Dreschorgane 7 und der ihnen zugeordnete Dreschkorb 6 von einem sich anbahnenden Erntegutstau betroffen, kann die erste Maßnahme M1 zu einer Reduzierung der von dem Arbeitsorgan 20 zu verarbeitenden Erntegutemenge darin bestehen, dass die Erntegeschwindigkeit respektive die Vorfahrtgeschwindigkeit der Erntemaschine 1 reduziert wird. Eine Detektion eines Erntegutstaus im Bereich der Dreschorgane 7 kann über den Schlupf der Dreschorgane 7 sowie über die Veränderung der Öffnungsweite des Dreschkorbes 6 erkannt werden, da bei einem sich anbahnenden Erntegutstau an der Dreschtrommel mit zunehmendem Schlupf der Dreschkorb 6 aufgedrückt wird.

Eine entsprechende erste Maßnahme M1, die zu einer Reduzierung der von dem Arbeitsorgan 20 zu verarbeitenden Erntegutemenge führt, wird beispielsweise auch eingeleitet, wenn ein Erntegutstau am Mordenschüttler 9 detektiert wird. Indiz für einen sich anbahnenden Erntegutstau ist der Drehzahlabfall, der durch zumindest einen am Hordenschüttler 9 vorgesehenen Drehzahlsensor erfasst wird. Auch in diesem Fall wird zunächst die Erntegeschwindigkeit respektive die Vorfahrtgeschwindigkeit der Erntemaschine 1 reduziert, um dem Hordenschüttler 9 Zelt zu geben, den sich anbahnenden Erntegutstau selbsttätig zu bewältigen.

Als ein weiteres Beispiel kann der Überkehrelevator 31 herangezogen werden. Hierbei kann bei einem sich anbahnenden Erntegutstau die Überkehrerntegutmenge des abfördernden Überkehrelevators 31 beeinflusst werden, indem die Sieböffnungsweite der oberen Siebebene 14 verkleinert und /oder die der unteren Siebebene 15 vergrößert werden. Alternativ oder zusätzlich zu der Verstellung der Sieböffnungsweiten kann die Drehzahl des Gebläses 16 erhöht werden. Ein Indiz für einen Erntegutstau im Überkehrelevator 31 ist der Drehzahlabfall des Überkehrelevators 31.

In einem nachfolgenden zweiten Abfrageschritt E2 wird geprüft, ob die erste Maßnahme M1 die Verstopfungsgefahr hat bannen können. Ist ein Ansteigen der Drehzahl des Arbeitsorganes 20 zu verzeichnen, so ist die Gefahr eines Erntegutstaus als beseitigt anzusehen, was dazu führt, dass die veränderten Einstellungen in einem nachfolgenden Schritt S2 auf die vorherigen Einstellungen für den Betrieb des oder der betroffenen Arbeitsorgane 20 zurückgeführt werden. Abschließend wird der Bediener 24 der Erntemaschine 1 in einer dritten Maßnahme M3 auf das aufgetretene Problem hingewiesen, um ihn über das betroffene Arbeitsorgan 20 und die mit der Durchführung der Beseitigung des sich anbahnenden Erntegutstaus verbundenen Gegenmaßnahmen zu informieren. Darüber hinaus werden dem Bediener 24 modifizierte Einstellungen vorgeschlagen, die das Risiko eines erneuten Erntegutstaus des Arbeitsorganes 20 verhindern oder zumindest reduzieren könnten.

Kann durch die eingeleitete erste Maßnahme M1 der sich anbahnende Erntegutstau nicht verhindert werden, so wird zu dem ersten Abfrageschritt E1 zurückgesprungen, um zu überprüfen, ob trotz der eingeleiteten ersten Maßnahme M1 nur ein Passieren des ersten Schwellwertes SW1 vorliegt oder aber in Folge der nicht ausreichenden Maßnahme M1 bereits der zweite Schwellwert SW2 passiert wurde. Für den Fall, dass der zweite Schwellwert SW2 noch nicht passiert wurde, wird erneut eine Veränderung einer zumindest den Erntebetrieb der selbstfahrenden Erntemaschine 1 beeinflussenden Einstellung, deren Änderung zu einer Reduzierung der zu verarbeitenden Erntegutemenge führt, durchgeführt.

Wird in dem ersten Abfrageschritt E1 festgestellt, dass zwischenzeitlich oder bereits mit dem Auftreten des Drehzahlabfalles auf Grund einer fortgeschrittenen Ausprägung des Erntegutstaus der zweite Schwellwert SW2 passiert wurde, wird unter Auslassung der ersten Maßnahme M1 die zweite Maßnahme M2 eingeleitet, welche in der Unterbrechung des Gutflusses besteht, und die zum Ziel hat, die Folgen der Unterbrechung des Gutflusses zu minimieren. Gemäß der zweiten Maßnahme M2 ist vorgesehen, dass bei einem Überschreiten des zweiten Schwellwertes SW2 für die Drehzahl des von einem Erntegutstau betroffenen Arbeitsorganes 20 zumindest eine den Erntebetrieb der selbstfahrenden Erntemaschine 1 beeinflussende Einstellung verändert wird, die zu einer Unterbrechung der Zufuhr von Erntegut führt, während die Einstellungen des von einem Erntegutstau betroffenen Arbeitsorganes 20 unverändert bleiben.

In einem nachfolgenden dritten Entscheidungsschritt E3 wird überprüft, ob die eingeleitete zweite Maßnahme M2 dazu geführt hat, eine Verstopfung des betroffenen Arbeitsorganes 20 zu vermeiden oder ob trotzdem eine Verstopfung desselben aufgetreten ist. Hierzu wird der Verlauf der Drehzahl des betroffenen Arbeitsorganes 20, dessen Verlauf in Fig. 2 beispielhaft dargestellt ist, überwacht. Tritt nach dem Passieren des zweiten Schwellwertes SW2 auf Grund der eingeleiteten zweiten Maßnahme M2 ein weiterer Drehzahlabfall auf, wie der Verlauf der Drehzahl zwischen den Zeitzpunkten t2 und t3 verdeutlicht, ist dies das Indiz dafür, dass das Auftreten der Verstopfung an dem betreffenden Arbeitsorgan 20 nicht verhindert werden konnte. Zum Schutz des Antriebes des von dem Erntegutstau betroffenen Arbeitsorganes 20 wird dieses automatisch von seinem Antrieb entkoppelt, was als fünfte Maßnahme M5 in dem Ablaufdiagramm dargestellt ist. Dem Bediener 24 des Mähdreschers 2 werden in einem vierten Schritt S4 der Grund der Abschaltung mitgeteilt sowie mögliche Maßnahmen für ein weiteres Vorgehen vorgeschlagen, um das Auftreten eines Erntegutstaus während des nachfolgenden Ernteprozesses verhindern zu können.

Zeigt die eingeleitete zweite Maßnahme M2 hingegen die angestrebte Wirkung, nämlich den Abbau des Erntegutstaus in dem betroffenen Arbeitsorgan 20, so wird in dem dritten Abfrageschritt E3 festgestellt, dass eine Reduzierung des Drehzahlabfalls des von einem sich anbahnenden Erntegutstaus betroffenen Arbeitsorganes 20 eingesetzt hat, so dass als eine vierte Maßnahme M4 eine Veränderung einer zumindest den Erntebetrieb der selbstfahrenden Erntemaschine 1 beeinflussenden Einstellung, deren Änderung zu einer Reduzierung der zu verarbeitenden Erntegutemenge führt, durchgeführt wird.

Beispielhaft wird das Vorgehen nach dem Passieren des zweiten Schwellwertes SW2 anhand des Auftretens der Verstopfung im Bereich der Überkehr oder der Dreschorgane 7 erläutert. Als eine zweite Maßnahme M2 wird in den Fällen eines sich anbahnenden Erntegutstaus im Bereich der Überkehr oder der Dreschorgane 7 das Schneidwerk 3 abgeschaltet sowie die Vorfahrtgeschwindigkeit der Erntemaschine 1 auf Null gesetzt. Ergänzend wird, falls im Zeitpunkt der Anbahnung eines Erntegutstaus aktiv, auch der Abtankvorgang unterbrochen. Zugleich werden die Einstellung des von einem sich anbahnenden Erntegutstau bedrohten Arbeitsorganes 20, beispielsweise dem Überkehrelevator 31 oder der Dreschorgane 7 beibehalten, um diesem die Möglichkeit zu geben, den sich anbahnenden Gutstau aufzulösen, da das Nachführen weiteren Erntegutes temporär unterbunden durch die zweite Maßnahme M2 wurde.

In dem nachfolgenden dritten Abfrageschritt E3 wird geprüft, ob die zweite Maßnahme M2 den gewünschten Erfolg hatte. Wurde durch die Unterbrechung der Erntegutzufuhr eine Verstopfung im Bereich der Überkehr vermieden, so wird in einem nachfolgenden Schritt eine vierte Maßnahme M4 eingeleitet, die dazu dient, eine potenzielle Verstopfungsgefahr zumindest zu reduzieren oder zu beseitigen. Im Fall der Überkehr als betroffenem Arbeitsorgan 20 wird die Sieböffnungsweite der oberen Siebebene 14 verkleinert und /oder die der unteren Siebebene 15 vergrößert werden. Alternativ oder zusätzlich zu der Verstellung der Sieböffnungsweiten kann die Drehzahl des Gebläses 16 erhöht werden. Ist das Dreschorgan 7 von einem sich anbahnenden Erntegutstau betroffen, würde die Dreschtrommeldrehzahl reduziert.

Im Anschluss an die Durchführung der vierten Maßnahme M4 wird in einem vierten Abfrageschritt E4 geprüft, ob durch die vierte Maßnahme M4 die Gefahr eines Erntegutstaus beseitigt werden konnte. Ist dies erfolgreich geschehen, erhält der Bediener 24 in einem dritten Schritt S3 eine Information darüber, dass die gegenwärtig vorgegebenen Einstellungen die Gefahr eines Erntegutstaus im Bereich der Überkehr oder der Dreschorgane 7 in sich bergen. Wird hingegen in dem vierten Abfrageschritt E4 festgestellt, dass die eingeleitete vierte Maßnahme M4 die Verstopfungsgefahr nicht beseitigen konnte, wird auf den dritten Abfrageschritt E3 zurück verzweigt, in welchem dann erneut Anhand des Drehzahlverlaufes des betroffenen Arbeitsorganes 20 über die zu ergreifende Maßnahme M4 oder M5 entschieden wird.

Konnte die zweite Maßnahme M2 die Gefahr eines Erntegutstaus auf Grund des Fortschrittes nicht mehr beseitigen, so wird nach dem dritten Abfrageschritt E3 abgezweigt und die fünfte Maßnahme M5 eingeleitet, mit dem Ziel, die negativen Auswirkungen eines Erntegutstaus zu minimieren. So wird für das oben erläuterte Beispiel der Gefahr eines Erntegutstaus im Bereich der Überkehr oder der Dreschorgane 7 dadurch entgegengewirkt, dass als fünfte Maßnahme M5 der Überkehrelevator 31 oder das Dreschwerk abgeschaltet werden. Im Anschluss daran wird der Bediener 24 in einem nachfolgenden vierten Schritt S4 über den Ort des Erntegutstaus, in dem vorstehend beschriebenen Beispiel im Bereich der Überkehr oder der Dreschorgane 7, informiert, und er erhält zusätzlich einen Hinweis darauf, das und gegebenenfalls auch welche Einstellungen für den weiteren Betrieb zu verändern sind, um einen erneuten Erntegutstau bei den bestehenden Konditionen zu vermeiden.

Die in Fig. 1 angedeutete Steuerungseinrichtung 23 des Mähdreschers 2 weist eine Prozessoreinheit auf, die der Auswertung der von Drehzahlsensoren an den jeweiligen Arbeitsorganen 20 erfassten Drehzahlen auswertet und überwacht. In einer nichtflüchtigen Speichereinrichtung der Steuerungseinrichtung 23 sind die ersten und zweiten Schwellwerte SW1 und SW2 eines jeden Arbeitsorganes 20 durch eine Eingabe hinterlegbar, die über eine mit der Steuereinrichtung 23 verbundene Eingabeeinheit 29 editierbar sind, um diese an sich ändernde Erntebedingungen wie verschiedene Erntegutarten und/oder Erntegutkonditionen individuell anpassen zu können. Ebenfalls denkbar ist, dass bereits eine Vielzahl von ersten und zweiten Schwellwerten in der Speichereinheit hinterlegt sind, welche verschiedene Erntegutarten und/oder Erntegutkonditionen repräsentieren, die durch den Bediener 24 auswählbar sind. Die Steuereinrichtung 23 steht mit den jeweiligen den Arbeitsorganen 20 und dem mindestens einen Antrieb zur Überwachung ihres Betriebszustandes zugeordneten Sensoren in Verbindung, so dass ein von dem zumindest einen Sensor erfasster Istwert eines Parameters des mindestens eines Arbeitsorganes 20 von der dazu eingerichteten Steuerungseinrichtung 23 auswertbar und mit mindestens einem Schwellwert SW1, SW2 für diesen Parameter vergleichbar ist, der für einen sich ausbildenden Erntegutstau an dem Arbeitsorgan 20 charakteristisch ist.

Die Steuerungseinrichtung 23 ist dazu eingerichtet, als Parameter die Drehzahl des Arbeitsorganes 20 auszuwerten, und bei einem Überschreiten eines ersten Schwellwertes SW1 für diesen Parameter zunächst zumindest eine den Erntebetrieb der selbstfahrenden Erntemaschine 1 beeinflussende Einstellung zu verändern, die zu einer Reduzierung der zu verarbeitenden Erntegutemenge führt, sowie bei einem Überschreiten eines zweiten Schwellwertes SW2 für diesen Parameter zumindest eine den Erntebetrieb der selbstfahrenden Erntemaschine 1 beeinflussende Einstellung zu verändern, die zu einer Unterbrechung der zu verarbeitenden Erntegutemenge führt.

Des Weiteren ist die Steuerungseinrichtung 23 mit Bremseinrichtungen an den Arbeitsorganen 20 in der Weise verbunden, dass die Steuereinrichtung 23 bei der Durchführung der zweiten Maßnahme M2 oder der fünften Maßnahme M5 durch gezieltes Ansteuern der Bremseinrichtung die von der Durchführung einer der Maßnahmen M2 oder M5 betroffenen Arbeitsorgane 20 aktiv abbremsen, um ein Nachlaufen der betreffenden Arbeitsorgane 20 und damit einen weiteren Erntegutfluss zu unterbinden, der die weitere Ausbildung eines Erntegutstaus begünstigen würde.

### Bezugszeichenliste

- 1: landwirtschaftliche Arbeitsmaschine
- 2: Mähdrescher
- 3: Getreideschneidwerk
- 4: Schrägförderer
- 5: Erntegutstrom
- 6: Dreschkorb
- 7: Dreschorgan
- 8: Umlenktrommel
- 9: Hordenschüttler
- 10: Trenneinrichtung
- 11: Körner
- 12: Rücklaufboden
- 13: Zuführboden
- 14: Siebebene
- 15: Siebebene
- 16: Gebläse
- 17: Reinigungseinrichtung
- 18: Elevator
- 19: Korntank
- 20: Arbeitsorgan
- 21: Fahrzeugkabine
- 22: Anzeigeeinrichtung
- 23: Steuerungseinrichtung
- 24: Bediener
- 25: Haspel
- 26: Messerbalken
- 27: Einzugsförderschnecke
- 29: Eingabeeinheit
- 30: Auffangboden
- 31: Überkehrelevator
- SW1: Erster Schwellwert
- SW2: Zweiter Schwellwert
- Δt: Zeitintervall
- S1: Erster Schritt
- S2: Zweiter Schritt
- S3: Dritter Schritt
- S4: Vierter Schritt
- E1: Erster Abfrageschritt
- E2: Zweiter Abfrageschritt
- E3: Dritter Abfrageschritt
- M1: Erste Maßnahme
- M2: Zweite Maßnahme
- M3: Dritte Maßnahme
- M4: Vierte Maßnahme
- M5: Fünfte Maßnahme

## Patentansprüche

1. Verfahren zur Feststellung eines sich an einem Arbeitsorgan (20) einer mehrere Arbeitsorgane (20) aufweisenden selbstfahrenden Erntemaschine (1) ausbildenden Erntegutstaus, dessen Ausbildung durch die Auswertung eines von zumindest einem Sensor erfassten Istwertes eines Parameters, der der Überwachung des Betriebszustandes eines der Arbeitsorgane (20) der Erntemaschine (1) dient, der mit mindestens einem Schwellwert (SW1, SW2) für diesen Parameter verglichen wird, der für einen sich ausbildenden Erntegutstau an diesem Arbeitsorgan (20) charakteristisch ist, bestimmt wird,
**dadurch gekennzeichnet,**
**dass** als Parameter die Drehzahl des Arbeitsorganes (20) überwacht wird, und
**dass** bei einem Passieren eines ersten Schwellwertes (SW1) für einen Drehzahlabfall zunächst zumindest eine den Erntebetrieb der Erntemaschine (1) beeinflussende Einstellung verändert wird, die zu einer Reduzierung der zu verarbeitenden Erntegutemenge führt, während die Einstellungen des von einem Erntegutstau betroffenen Arbeitsorganes (20) unverändert bleiben;
**dass** bei einem Passieren eines zweiten Schwellwertes (SW2) für einen Drehzahlabfall zumindest eine den Erntebetrieb der Erntemaschine (1) beeinflussende Einstellung verändert wird, die zu einer Unterbrechung der Zufuhr von Erntegut führt, während die Einstellungen des von einem Erntegutstau betroffenen Arbeitsorganes (20) unverändert bleiben, und
**dass** bei einem Wiederansteigen der Drehzahl des betroffenen Arbeitsorganes (20) die Unterbrechung der Zufuhr von Erntegut aufgehoben wird,
während bei einem anhaltenden Drehzahlabfall das betroffene Arbeitsorgan (20) automatisch von seinem Antrieb entkoppelt wird.

2. Verfahren nach Anspruche 1, **dadurch gekennzeichnet, dass** zu einer Reduzierung der zu verarbeitenden Erntegutemenge die Vorfahrtgeschwindigkeit verändert wird.

3. Verfahren nach einem der Ansprüche 1 oder 2, **dadurch gekennzeichnet, dass** zu einer Reduzierung der zu verarbeitenden Erntegutemenge die Einstellungen zumindest eines der Arbeitsorgane (20) verändert werden, die dem von einem Erntegutstau betroffenen Arbeitsorgan (20) vorgeschaltet sind.

4. Verfahren nach Anspruch 1, **dadurch gekennzeichnet, dass** zur Unterbrechung der Zufuhr von Erntegut der Antrieb des das Erntegut von einem Feld aufnehmenden Arbeitsorganes (20) unterbrochen und die Vorfahrt der Erntemaschine (1) unterbunden wird.

5. Verfahren nach Anspruch 1, **dadurch gekennzeichnet, dass** bei einem Passieren des zweiten Schwellwertes (SW2) des von einem Erntegutstau betroffenen Arbeitsorganes (20) alle diesem vorgeschalteten Arbeitsorgane (20) aktiv gebremst werden.

6. Verfahren nach Anspruch 4 oder 5, **dadurch gekennzeichnet, dass** als Indikator für den Zeitpunkt der Wiederinbetriebnahme der abgeschalteten Arbeitsorgane (20) eine positive Beschleunigung des Antriebes gewertet wird.

7. Verfahren nach Anspruch 6, **dadurch gekennzeichnet, dass** bei einem Unterschreiten des zweiten Schwellwertes (SW2) die abgeschalteten Arbeitsorgane (20) wieder in Betrieb genommen werden.

8. Verfahren nach einem der Ansprüche 1 bis 7, **dadurch gekennzeichnet, dass** ein einen sich an einem Arbeitsorgan (20) ausbildenden Erntegutstau repräsentierendes Signal generiert wird, das einem Bediener (24) der Erntemaschine (1) zur Anzeige gebracht wird.

9. Verfahren nach einem der Ansprüche 1 bis 8, **dadurch gekennzeichnet, dass** dem Bediener (24) in Abhängigkeit von dem betroffenen Arbeitsorgan (20) zumindest ein Vorschlag zur Einstellung des Arbeitsorganes (20) aufgezeigt wird, um ein erneutes Auftreten eines Erntegutstaus an diesem zu vermeiden

10. Steuerungseinrichtung (23) für eine selbstfahrenden Erntemaschine (1), die eine Vielzahl von Arbeltsorganen (20) aufweist, die von mindestens einem Antrieb angetrieben werden, wobei die Arbeitsorgane (20) und der mindestens eine Antrieb durch eine Überlastschutzvorrichtung miteinander gekoppelt sind und dass den Arbeltsorganen (20) und dem mindestens einen Antrieb zur Überwachung ihres Betriebszustandes zumindest ein Sensor zugeordnet ist, dass ein von dem zumindest einen Sensor erfasster Istwert eines Parameters des mindestens eines Arbeitsorganes (20) von der dazu eingerichteten Steuerungseinrichtung (23) auswertbar und mit mindestens einem Schwellwert (SW1, SW2) für diesen Parameter vergleichbar ist, der für einen sich ausbildenden Erntegutstau an dem Arbeitsorgan (20) charakteristisch ist,
**dadurch gekennzeichnet, dass**
die Steuerungseinrichtung (23) dazu eingerichtet ist,
bei einem Passieren eines ersten Schwellwertes (SW1) für einen Drehzahlabfall zunächst zumindest eine den Erntebetrieb der Erntemaschine (1) beeinflussende Einstellung zu verändern, die zu einer Reduzierung der zu verarbeitenden Erntegutemenge führt, während die Einstellungen des von einem Erntegutstau betroffenen Arbeitsorganes (20) unverändert bleiben:
bei einem Passieren eines zweiten Schwellwertes (SW2) für einen Drehzahlabfall zumindest eine den Erntebetrieb der Erntemaschine (1) beeinflussende Einstellung zu verändern, die zu einer Unterbrechung der Zufuhr von Erntegut führt, während die Einstellungen des von einem Erntegutstau betroffenen Arbeitsorganes (20) unverändert bleiben, und
bei einem Wiederensteigen der Drehzahl des betroffenen Arbeitsorganes (20) die Unterbrechung der Zufuhr von Erntegut aufzuheben, oder
bei einem anhaltenden Drehzahlabfall das betroffene Arbeitsorgan (20) automatisch von seinem Antrieb zu entkoppeln.

11. Steuerungseinrichtung (23) nach Anspruch 10, **dadurch gekennzeichnet, dass** das mindestens eine Arbeitsorgan (20) mit einer Bremseinrichtung ausgeführt ist, die von der Steuerungseinrichtung (23) ansteuerbar ist.

## Claims

1. A method of identifying a crop material accumulation which is formed at a working member (20) of a self-propelled harvesting machine (1) having a plurality of working members (20) and the formation of which is determined by the evaluation of an actual value, detected by at least one sensor, of a parameter which serves to monitor the operating condition of one of the working members (20) of the harvesting machine (1), which is compared to at least one threshold value (SW1, SW2) for said parameter, which is characteristic of a forming crop material accumulation at said working member (20),
**characterised in that**
the rotary speed of the working member (20) is monitored as the parameter,
when a first threshold value (SW1) is passed for a rotary speed drop firstly at least one setting which influences the harvesting operation of the harvesting machine (1) is altered, which leads to a reduction in the amount of crop material to be processed, while the settings of the working member (20) affected by a crop material accumulation remain unchanged,
when a second threshold value (SW2) is passed for a rotary speed drop at least one setting which influences the harvesting operation of the harvesting machine (1) is altered, which leads to an interruption in the feed of crop material while the settings of the working member (20) affected by a crop material accumulation remain unchanged, and
when the rotary speed of the working member (20) in question rises again the interruption in the feed of crop material is cancelled,
while with an ongoing rotary speed drop the working member (20) in question is automatically uncoupled from its drive.

2. A method according to claim 1 **characterised in that** the forward travel speed is altered for a reduction in the amount of crop material to be processed.

3. A method according to one of claims 1 and 2 **characterised in that** the settings of at least one of the working members (20) connected upstream of the working member (20) affected by a crop material accumulation are altered for a reduction in the amount of crop material to be processed.

4. A method according to claim 1 **characterised in that** to interrupt the feed of crop material the drive of the working member (20) which is picking up the crop material from a field is interrupted and the forward travel of the harvesting machine (1) is stopped.

5. A method according to claim 1 **characterised in that** when the second threshold value (SW2) of the working member (20) affected by a crop material accumulation is passed all working members (20) connected upstream of said working member are actively braked.

6. A method according to claim 4 or claim 5 **characterised in that** a positive acceleration of the drive is evaluated as an indicator for the moment in time of restoring operation of the shut-down working members (20).

7. A method according to claim 6 **characterised in that** when the parameter value falls below the second threshold value (SW2) the shut-down working members (20) are set in operation again.

8. A method according to one of claims 1 to 7 **characterised in that** a signal representing a crop material accumulation which is being formed at a working member (20) is generated, said signal being displayed to an operator (24) of the harvesting machine (1).

9. A method according to one of claims 1 to 8 **characterised in that** at least one suggestion for setting of the working member (20) is displayed to the operator (24) in dependence on the working member (20) affected in order to avoid renewed occurrence of a crop material accumulation thereat.

10. A control device (23) for a self-propelled harvesting machine (1) having a plurality of working members (20) which are driven by at least one drive, wherein the working members (20) and the at least one drive are coupled together by an overload protection device and at least one sensor is associated with the working members (20) and the at least one drive for monitoring the operating condition thereof, an actual value, detected by the at least one sensor, of a parameter of the at least one working member (20) can be evaluated by the control device (23) which is adapted for same, and can be compared to at least one threshold value (SW1, SW2) for said parameter, which is characteristic of a crop material accumulation which is being formed at the working member (20),
**characterised in that**
the control device (23) is adapted to provide that when a first threshold value (SW1) is passed for a rotary speed drop firstly at least one setting which influences the harvesting operation of the harvesting machine (1) is altered, which leads to a reduction in the amount of crop material to be processed, while the settings of the working member (20) affected by a crop material accumulation remain unchanged,
when a second threshold value (SW2) is passed for a rotary speed drop at least one setting which influences the harvesting operation of the harvesting machine (1) is altered, which leads to an interruption in the feed of crop material while the settings of the working member (20) affected by a crop material accumulation remain unchanged, and
when the rotary speed of the working member (20) in question rises again the interruption in the feed of crop material is cancelled, or
with an ongoing rotary speed drop the working member (20) in question is automatically uncoupled from its drive.

11. A control device (23) according to claim 10 **characterised in that** the at least one working member (20) is fitted with a brake device actuable by the control device (23).

## Revendications

1. Procédé pour repérer la formation d'un amoncellement de produit de récolte sur un organe de travail (20) d'une machine de récolte automotrice (1) comportant plusieurs organes de travail (20), cette formation étant repérée par l'analyse d'une valeur réelle, détectée par au moins un capteur, d'un paramètre servant à surveiller l'état de fonctionnement d'un des organes de travail (20) de la machine de récolte (1), laquelle est comparée avec au moins une valeur seuil (SW1, SW2) pour ce paramètre, cette dernière étant caractéristique de la formation d'un amoncellement de produit de récolte sur cet organe de travail (20), **caractérisé en ce que** la vitesse de rotation de l'organe de travail (20) est surveillée en tant que paramètre, et que, en cas de dépassement d'une première valeur seuil (SW1) accompagnée d'une baisse de vitesse de rotation, dans un premier temps au moins un réglage influençant l'opération de récolte de la machine de récolte (1) est modifié et entraîne une réduction de la quantité de produit de récolte à traiter, tandis que les réglages de l'organe de travail (20) concerné par un amoncellement de produit de récolte restent inchangés ; que, en cas de dépassement d'une deuxième valeur seuil (SW2) accompagnée d'une baisse de vitesse de rotation, au moins un réglage influençant sur l'opération de récolte de la machine de récolte (1) est modifié et entraîne une interruption de l'amenée de produit de récolte, tandis que les réglages de l'organe de travail (20) concerné par un amoncellement de produit de récolte restent inchangés, et que, en cas de remontée de la vitesse de rotation de l'organe de travail (20) concerné, l'interruption de l'amenée de produit de récolte est levée, tandis que, en cas de baisse persistante de la vitesse de rotation, l'organe de travail (20) concerné est désaccouplé automatiquement de son entraînement.

2. Procédé selon la revendication 1, **caractérisé en ce que**, pour réduire la quantité de produit de récolte à traiter, la vitesse de marche avant est modifiée.

3. Procédé selon une des revendications 1 ou 2, **caractérisé en ce que**, pour réduire la quantité de produit de récolte à traiter, les réglages d'au moins un des organes de travail (20) disposés en amont de l'organe de travail (20) concerné par un amoncellement de produit de récolte sont modifiés.

4. Procédé selon la revendication 1, **caractérisé en ce que**, pour interrompre l'amenée de produit de récolte, l'entraînement de l'organe de travail (20) qui ramasse le produit de récolte sur un champ est interrompu et la marche avant de la machine de récolte (1) est neutralisée.

5. Procédé selon la revendication 1, **caractérisé en ce que**, en cas de dépassement de la deuxième valeur seuil (SW2) de l'organe de travail (20) concerné par un amoncellement de produit de récolte, tous les organes de travail (20) placés en amont de celui-ci font l'objet d'un freinage actif.

6. Procédé selon la revendication 4 ou 5, **caractérisé en ce qu'**une accélération positive de l'entraînement est analysée comme indicateur de l'instant de la remise en service des organes de travail (20) mis hors service.

7. Procédé selon la revendication 6, **caractérisé en ce que** les organes de travail (20) mis hors service sont remis en service en cas de soupassement de la deuxième valeur seuil (SW2).

8. Procédé selon une des revendications 1 à 7, **caractérisé en ce qu'**un signal représentatif de la formation d'un amoncellement de produit de récolte sur un organe de travail (20) est généré et affiché à un opérateur (24) de la machine de récolte (1).

9. Procédé selon une des revendications 1 à 8, **caractérisé en ce qu'**en fonction de l'organe de travail (20) concerné, au moins une suggestion de réglage de l'organe de travail (20) est affichée à l'opérateur (24) pour éviter la réapparition d'un amoncellement de produit de récolte sur cet organe de travail (20).

10. Dispositif de commande (23) pour une machine de récolte automotrice (1) comportant une pluralité d'organes de travail (20) entraînés par au moins un entraînement, les organes de travail (20) et ledit au moins un entraînement étant couplés entre eux par un dispositif de protection contre la surcharge, et au moins un capteur étant associé aux organes de travail (20) et audit au moins un entraînement pour surveiller leur état de fonctionnement, une valeur réelle d'un paramètre dudit au moins un organe de travail (20) détectée par ledit au moins un capteur pouvant être analysée par le dispositif de commande (23) conçu à cet effet et comparée avec au moins une valeur seuil (SW1, SW2) de ce paramètre, laquelle est caractéristique de la formation d'un amoncellement de produit de récolte sur l'organe de travail (20), **caractérisé en ce que** le dispositif de commande (23) est conçu pour, en cas de dépassement d'une première valeur seuil (SW1) accompagnée d'une baisse de vitesse de rotation, dans un premier temps au moins modifier un réglage influençant l'opération de récolte de la machine de récolte (1) et entraîner une réduction de la quantité de produit de récolte à traiter, tandis que les réglages de l'organe de travail (20) concerné par un amoncellement de produit de récolte restent inchangés ; en cas de dépassement d'une deuxième valeur seuil (SW2) accompagnée d'une baisse de vitesse de rotation, modifier au moins un réglage influençant l'opération de récolte de la machine de récolte (1) et entraîner une interruption de l'amenée de produit de récolte, tandis que les réglages de l'organe de travail (20) concerné par un amoncellement de produit de récolte restent inchangés, et, en cas de remontée de la vitesse de rotation de l'organe de travail (20) concerné, lever l'interruption de l'amenée de produit de récolte, ou, en cas de baisse persistante de la vitesse de rotation, désaccoupler automatiquement l'organe de travail (20) concerné de son entraînement.

11. Dispositif de commande (23) selon la revendication 10, **caractérisé en ce que** ledit au moins un organe de travail (20) est conçu avec un dispositif de freinage qui peut être commandé par le dispositif de commande (23).
